# FASCICULE DE BREVET EUROPEEN

(11) **EP 2 847 262 B1**
(45) Date de publication et mention de la délivrance du brevet: **05.10.2016**
(21) Numéro de dépôt: 13721705.5
(22) Date de dépôt: 07.05.2013
(51) Int. Cl.: C08K 3/22, C08K 5/01, C08K 5/09, C08L 25/06, C08L 33/12, C08L 91/06, G21C 3/42, C08K 5/00

(54) **COMPOSITION CHARGEE DE POUDRE D'ACTINIDE ET DE POLYMERE AROMATIQUE ET/OU DE PMMA**
ZUSAMMENSETZUNG AUS AKTINIDPULVER UND EINEM AROMATISCHEN POLYMER UND/ODER PMMA
COMPOSITION FILLED WITH ACTINIDE POWDER AND AROMATIC POLYMER AND/OR PMMA

(30) Priorité: 11.05.2012 FR 1254332
(43) Date de publication de la demande: 18.03.2015
(73) Titulaire: Commissariat à l'Énergie Atomique et aux Énergies Alternatives, 75015 Paris (FR)
(72) Inventeur: BRICOUT, Julien, F-13011 Marseille (FR); BROTHIER, Meryl, F-13090 Aix En Provence (FR); MATHERON, Pierre, 04100 Manosque (FR); ABLITZER, Carine, F-83560 Saint Julien Le Montagnier (FR); GELIN, Jean-Claude, F-25000 Tilleroyes (FR)
(74) Mandataire: Esselin, Sophie
(86) Numéro de dépôt international: PCT/EP2013/059442
(87) Numéro de publication internationale: WO 2013/167566

(56) Documents cités:
- EP-A1- 1 757 896
- FR-A1- 2 286 476
- GB-A- 881 883
- JP-A- 2000 328 103

## Description

Le domaine de l'invention est celui des compositions à base de poudre d'actinide, et présentant l'intérêt d'être injectables car permettant une rhéologie compatible avec les systèmes d'injection. Un des principaux domaines d'application peut concerner (mais non exclusivement) la fabrication de combustibles nucléaires (ou plus généralement de pièces/matériaux à base d'actinides).

Plus généralement, la présente invention concerne la réalisation de pièces à formes plus ou moins complexes contenant des actinides que ce soit sous forme métallique, oxyde, carbure ou nitrure. L'élaboration classique et industrielle de combustible passe actuellement et principalement par l'exploitation de la métallurgie des poudres (reposant sur le pressage des poudres constitutives des pièces/combustibles à mettre en forme et le frittage des compacts obtenus à l'issue du pressage).

Néanmoins, la mise en oeuvre de la métallurgie des poudres induit un certain nombre d'inconvénients et de verrous lorsque l'on veut réaliser des pièces de formes complexes ou que l'on souhaite avoir une très bonne maîtrise du dimensionnel des pièces (a fortiori lorsque celles-ci sont de formes complexes) à élaborer et ce sans avoir recours à une étape de rectification.

Actuellement, la fabrication de combustibles nucléaires (composés d'actinides) est typiquement réalisée via des procédés classiques basés sur la métallurgie des poudres. Deux grandes étapes sont exploitées pour ce faire :
- la mise en forme des poudres constitutives du combustible (pressage avec une préparation potentielle préalable des poudres) ;
- le frittage du compact obtenu à l'issue de l'étape de pressage des poudres.

Ce type de procédé est éprouvé et industriel mais induit au moins quatre types d'inconvénients :
- la difficulté de maîtrise de la forme des pièces issues du frittage qui est elle-même conditionnée par la maîtrise de l'empilement granulaire dans les moules de presse (liée à l'homogénéité de la répartition de la matière). Or les poudres d'actinides étant pour certaines relativement cohésives, cette maîtrise n'est pas triviales et nécessite le plus souvent une préparation des poudres préalablement à leur mise en forme. Pour certaines utilisations, les spécifications géométriques imposent une rectification des objets combustibles obtenus par métallurgie des poudres ;
- cette préparation des poudres induit souvent de la dissémination de poudres ce qui conduit à l'augmentation de la rétention dans les enceintes de confinement du procédé de fabrication. Ceci a pour impact un risque radiologique accru ;
- l'impossibilité d'obtention de pièces/combustibles dont la forme est complexe (i.e quelconque) et/ou non axisymétrique puisque la mise en forme est réalisée industriellement par pressage uniaxial ;
- la nécessité d'inerter les enceintes de confinement contenant les poudres d'actinides pour limiter les risques de pyrophoricité (lorsque les actinides sont sous forme métallique ou carbure notamment).

FR 2 286 476 A1 décrit des éléments de combustible nucléaire préparés en injectant un mélange à mouler sur des particules de combustible nucléaire enrobées.

Pour agir sur l'ensemble de ces inconvénients, le Demandeur propose des compositions chargées permettant de mettre en oeuvre un procédé dit par voie injection ou moulage de poudres par injection encore appelé « MPI » (ou « PIM » en anglais pour Powder Injection Moulding).

Néanmoins, pour que ce type de procédé soit opérant pour la mise en oeuvre de poudres d'actinides, il est nécessaire de disposer d'une matrice organique fluide constituée de composants organiques, généralement à base de polymères permettant une bonne (au sens répartition homogène) incorporation de la poudre au sein de ladite matrice organique. Cette matrice organique doit répondre à l'ensemble des fonctions objectifs et contraintes imposées par ce type de procédé au vu des spécificités des matériaux nucléaires à mettre en oeuvre et des spécifications des combustibles visés.

Actuellement, aucune formulation de matrice organique fluide permettant de réaliser des pièces d'actinides n'est mentionnée dans la littérature technique et scientifique. Ceci peut notamment s'expliquer par le nombre de contraintes/critères pesant sur une matrice organique chargée. Celles-ci/ceux-ci sont à prendre en compte pour la mise en oeuvre des poudres d'actinides qui ont des propriétés spécifiques et ce dans des conditions satisfaisantes (i.e. permettant d'obtenir des pièces dont les caractéristiques sont au moins équivalentes à celles obtenues par métallurgies des poudres).

Ainsi, pour répondre à cette problématique générale de fabrication de combustibles/pièces d'actinides par procédé MPI d'une manière satisfaisante (i.e. permettant d'obtenir des pièces dont les caractéristiques sont au moins équivalentes à celles obtenues par la métallurgie des poudres), il est nécessaire pour la matrice chargée envisagée de répondre concomitamment aux critères suivants :
- un taux de charge de poudres d'actinides dans la matrice chargée suffisant, pour obtenir après déliantage des densités d'empilement granulaires supérieures à 40%. (Il est rappelé que l'opération de déliantage consiste à retirer les composés carbonés constitutifs de la charge composite. Ce déliantage peut se faire classiquement par action thermique permettant de volatiliser la charge).

En effet, le procédé MPI appliqué aux poudres d'actinides ayant pour objectif d'aboutir à des objets dont les caractéristiques sont similaires à celles obtenues par la métallurgie des poudres, il est nécessaire après l'étape de déliantage des polymères de mise en forme d'aboutir à des empilements granulaires et devant être cohésifs, c'est-à-dire garder leur forme, et dont la densité est équivalente à celle obtenue par pressage uniaxial de poudres (métallurgie des poudres). Une poudre peut être considérée comme cohésive si elle répond notamment à la définition de Geldard (classe C) ou possède un coefficient de Hausner supérieur à 1,4, « Techniques de l'ingénieur mise en forme des poudres, J 3 380-1 ». Pour atteindre cette valeur minimale de taux de charge, il est nécessaire que la poudre, surtout si elle est cohésive, comme ce qui est classiquement le cas pour les poudres d'actinides (et notamment leurs oxydes) soit désagglomérée lors du malaxage /préparation de la charge. Ce pré-requit n'est pas trivial en soi pour les motifs suivants ;
- l'injectabilité de la charge : malgré le critère du taux de charge exprimé ci-dessus, il est nécessaire de pouvoir mettre en oeuvre la matrice chargée au sein d'un moule (ou au travers d'une filière si on procède à une extrusion) ce qui impose une gamme de viscosité de cisaillement comprise entre 50 et 10000 Pa.s lors de l'injection avec une gamme préférentielle inférieure à 1000 Pa.s pour un gradient de vitesse de 100 s⁻¹ ;
- le comportement rhéofluidifiant et une robustesse du comportement rhéologique avec la température, ou plus généralement les conditions de malaxage. Le comportement rhéologique de la charge peut s'avérer rédhibitoire. Par ailleurs, les poudres d'actinides pouvant être relativement denses, cohésives et polymodales, il est notamment nécessaire de limiter tout risque de ségrégation/sédimentation au sein de la matrice chargée en cas de mauvaise formulation ou condition de mélange durant le malaxage ;
- la stabilité des propriétés de la matrice chargée, ce qui sous-entend les critères suivants :
   ▪ une compatibilité physico-chimique, notamment une non miscibilité des polymères dans les conditions de mise en oeuvre du procédé MPI ;
   ▪ une stabilité chimique (c'est-à-dire une non interaction chimique notable entre les polymères entre eux et entre les polymères et les poudres d'actinides utilisées). Notamment, ce critère impose que le mélange des polymères constitutifs de la matrice soit stable au moins jusqu'à la plus faible température de décomposition des constituants de la matrice de composés organiques.

Sachant que les actinides sont par ailleurs des composés réputés favoriser la décomposition des composés carbonés constitutifs de la matrice chargée (cf. "The activity and mechanism of uranium oxide catalysts for the oxidative destruction of volatile organic compounds", S.H. Taylor, C. S. Heneghana, G.J. Hutchingsa et al., Catalysis Today, 59 :249-259, 2000 ; A study of uranium oxide based catalysts for the oxidative destruction of short chain alkanes, Applied Catalysis B : environnemental, 25 :137-149, 2000, S.H. Taylor et al.), ce critère de stabilité des propriétés n'est pas trivial à atteindre avec notamment soit un risque de modification du degré d'oxydation des actinides en contact avec les composés constitutifs de la matrice soit un risque de formation de résidus carbonés non déliantables (pouvant donc être pénalisants à l'issue de la fabrication selon la teneur résiduelle) lors de la mise en oeuvre du procédé MPI ;
- une matrice chargée déliantable sans recours à l'utilisation de solution aqueuse et ne renfermant pas d'eau. En effet, la mise en oeuvre de poudres d'actinides induit un risque de criticité accru lors de l'utilisation d'eau et cette utilisation induit par ailleurs une génération d'effluents liquides toujours peu aisée à traiter en milieu nucléaire.

Par ailleurs, bon nombre d'actinides induisent intrinsèquement des phénomènes dits de radiolyse. Ceci induit des dégradations potentielles des composés organiques constitutifs de la matrice organique fluide qui sont susceptibles d'être rédhibitoires pour l'utilisation visée du produit (perte de la tenue mécanique, gonflement, augmentation du taux de carbone, dégagement d'hydrogène ou gaz inflammable dans des quantités inacceptables,...). Ainsi, les composés organiques constitutifs de la matrice organique doivent être suffisamment résistants à ces phénomènes de radiolyse pour préserver à ladite matrice organique son acceptabilité vis-à-vis des autres critères précédemment évoqués.

C'est pourquoi, le Demandeur propose des compositions chargées en poudre d'actinide capables de résister à ces phénomènes de radiolyse et compatibles avec les propriétés nécessaires à un bon comportement dans le processus de mise en forme des poudres d'actinides par procédé classique MPI.

Notamment, les polymères dont le monomère comporte un noyau aromatique sont relativement résistants à la radiolyse et confèrent aux objets formés un maintien important de leur forme. En identifiant des compositions chargées également compatibles avec les problématiques d'injection précitées, il devient possible de définir des matrices chargées résistantes à la radiolyse.

Une difficulté pourrait demeurer, concernant le résidu carboné qui doit rester peu important à l'issue de l'opération de déliantage du fait d'une potentielle cokéfaction des noyaux aromatiques. Néanmoins, les compositions de la présente invention permettent de ne pas subir ce problème en raison justement de la possibilité d'utiliser notamment des polymères aromatiques qui assurent bien cette protection contre la radiolyse.

Le Demandeur a observé qu'il était également possible d'introduire un leurre pouvant être en revanche relativement sensible à la radiolyse. Un tel leurre (il peut s'agir d'un polymère de type poly méthacrylate de méthyle) absorbe l'énergie induite par les rayonnements émis par les poudres d'actinides protégeant les autres molécules constitutives de la matrice organique. Il faut cependant, pour qu'il n'y ait pas par exemple risque de gonflement de la pièce durant le temps de tenue à la radiolyse visé (de l'ordre de deux jours), ne pas dépasser une teneur en leurre trop importante ou ne pas prendre un leurre tout de même trop sensible (i.e. ayant un rendement de dégradation radiolytique trop important vis-à-vis de la poudre d'actinide à intégrer dans la matrice organique), cette condition peut être respectée grâce à des gammes de pourcentages sélectionnés dans la présente invention.

Les caractéristiques ci-dessus sont à respecter concomitamment avec celles des combustibles/pièces d'actinides visés qui doivent avoir des caractéristiques au moins équivalentes à celles atteignables par métallurgie des poudres, c'est à dire notamment :
- une densité équivalente à au moins 95% de la densité théorique du composé d'actinides visés après le frittage des pièces déliantées ;
- une homogénéité de la microstructure, c'est à dire une répartition de porosité et de taille de grain uniforme ;
- une maîtrise du dimensionnel, c'est-à-dire une variation des cotes du combustible par rapport aux cotes moyennes attendues inférieure à 0,2 %, soit une valeur de +/- 0,012 mm ;
- une teneur massique résiduelle en carbone inférieure à 0,05% (pour les cas des poudres autres que les carbures).

En synthèse, Il est ainsi à noter que l'ensemble des critères pesant directement sur la matrice chargée et ceux attendus sur l'objet atteignable par MPI de cette même matrice, définissent une problématique spécifique non triviale que se propose de résoudre la présente invention sachant par ailleurs que le respect de ces critères doit être rempli sur une durée suffisante (pouvant typiquement courir jusqu'à deux jours au moins après la fabrication de la matrice chargée) correspondant au temps de soumission possible de ladite matrice au phénomène de radiolyse avant déliantage complet dans une usine de fabrication du combustible.

Plus précisément la présente invention a pour objet une composition chargée en poudre d'actinide comprenant une matrice organique et une poudre d'actinide ou un mélange de poudres d'actinides caractérisée en ce qu'elle comprend au moins :
- un plastifiant comprenant un alcane dont la plus longue chaîne radicalaire comporte au moins quelques dizaines d'atomes de carbone et de teneur volumique comprise entre 20 et 70% du volume total des composés organiques seuls ;
- un liant comprenant au moins un polymère aromatique et/ou du polyméthacrylate de méthyle et de teneur volumique comprise entre 20 et 50 % du volume total des composés organiques seuls ;
- un dispersant comprenant un acide carboxylique ou ses sels dont la teneur volumique est inférieure à 10% du volume total des composés organiques seuls ;
- ladite poudre d'actinide ou ledit mélange de poudre d'actinides représentant entre 40% et 65% du volume total de la matrice chargée.

Ces compositions permettent d'atteindre les spécifications définies dans la problématique spécifique énoncées précédemment à savoir une limitation des effets de radiolyse sur la rhéologie des pâtes chargées obtenues et la tenue mécanique des objects injectés avant déliantage.

Selon une variante de l'invention, le liant comprend du polystyrène.

Selon une variante de l'invention, le liant comprend du polystyrène et un poly-oléfinique.

Selon une variante de l'invention, le liant comprend du polyméthacrylate de méthyle et un poly-oléfinique pouvant être du polyéthylène.

Selon une variante de l'invention, le plastifiant comprend de la paraffine.

Selon une variante de l'invention, le plastifiant comprend du polypropylène.

Selon une variante de l'invention, la surface spécifique des grains de ladite ou desdites poudre(s) d'actinides est comprise entre environ 1 m²/g et 15 m²/g.

Selon une variante de l'invention, la densité tassée de ladite poudre d'actinides est comprise entre environ 10 à 70% de la densité théorique du/des composé(s) de la poudre/des poudres.

Selon une variante de l'invention, la densité théorique des matériaux constitutifs de la poudre est comprise entre 2 à 20.

Selon une variante de l'invention, la densité théorique des matériaux constitutifs de la poudre est comprise entre 7 à 19.

Selon une variante de l'invention, le polymère poly-oléfinique possède une masse molaire moyenne d'au moins 10 000 g/mol.

Selon une variante de l'invention, l'acide carboxylique ou ses sels présentent une masse molaire au moins égale à 100 g/mol.

Selon une variante de l'invention, la proportion massique dudit acide carboxylique ou de son/ses sels par rapport à la masse de poudres d'actinides est comprise entre environ 0,01 et 1% massique.

L'invention sera mieux comprise et d'autres avantages apparaîtront à la lecture de la description qui va suivre donnée à titre non limitatif et grâce aux figures annexées parmi lesquelles :
- la figure 1 illustre l'ensemble des étapes d'un procédé MPI mis en oeuvre avec les compositions chargées de la présente invention ;
- la figure 2 illustre un exemple d'allure de l'instabilité de la pression d'écoulement en fonction du taux de cisaillement pour un cas type de mauvaise formulation ou condition de malaxage ;
- la figure 3 illustre la viscosité de cisaillement en fonction du taux de cisaillement à 220°C pour différentes compositions chargées selon l'invention ;
- les figures 4a, 4b et 4c illustrent l'évolution du couple d'incorporation en fonction du temps pour trois exemples de compositions chargées avec des poudres obtenues par voie sèche, selon l'invention ;
- la figure 5 montre le couple de malaxage pour trois exemples de compositions chargées à 50% volumique de poudre selon la présente invention ;
- les figures 6a, 6b et 6c illustrent l'évolution expérimentale de perte de masse d'exemples de compositions Fd, Fe et Ff selon l'invention, lors de l'opération de déliantage et sont comparées aux courbes théoriques ;
- la figure 7 illustre un exemple de cycle thermique d'opération de déliantage sous atmosphère Ar/H₂ à laquelle sont soumises des exemples de compositions chargées de l'invention ;
- les figures 8a, 8b et 8c illustrent des réponses de mesures d'analyse Thermo-Gravimétrique (ATG) et d'analyse Thermique Différentielle (ATD) réalisées sur des compositions de la présente invention ;
- les figures 9a, 9b et 9c illustrent les spectres DRX d'exemples de compositions chargées de la présente invention.

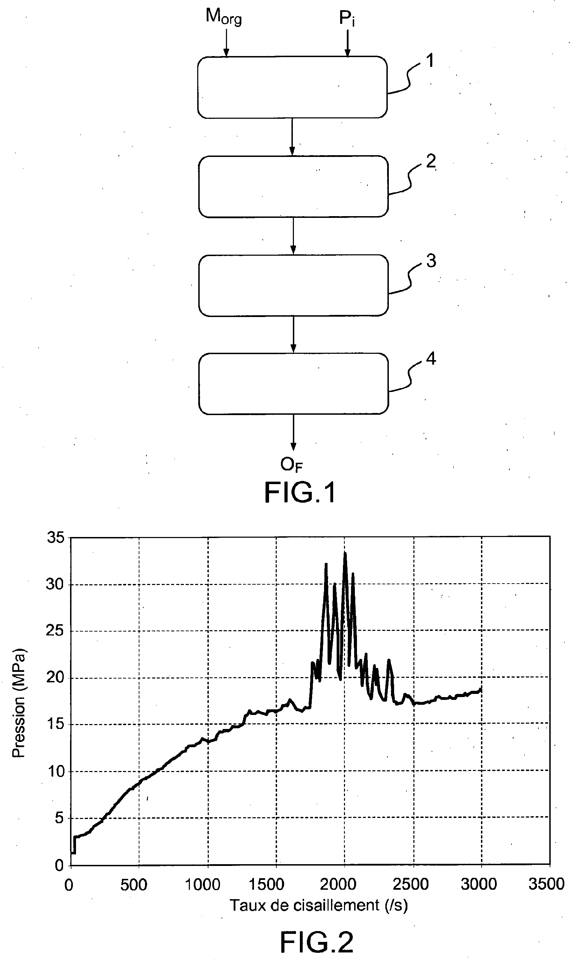

De manière générale, les compositions chargées de la présente invention sont destinées à fournir des charges d'actinides présentant des propriétés satisfaisantes et permettant une mise en oeuvre selon le procédé MPI décrit ci-après et illustré par les étapes récapitulées en figure 1.

Dans une première étape 1, correspondant au mélange et au malaxage des matières premières, on procède au mélange de l'ensemble des matières premières, à savoir dans la présente invention : la matrice organique M_{org} comprenant le plastifiant, le liant, le dispersant, et la charge à base de poudre d'actinides Pᵢ. Concernant le mode opératoire, la poudre est généralement ajoutée progressivement au mélange des autres matières premières à chaud à l'aide d'un malaxeur, pouvant être équipé de pales qui permettent d'avoir des taux de cisaillement importants assurant ainsi l'homogénéité de l'ensemble.

Dans une seconde étape 2, l'étape de moulage par injection peut être réalisée comme suit : la matrice chargée fluide préalablement obtenue est placée dans une presse à injecter. Le cycle d'injection se déroule alors de la manière suivante : la matière placée dans la trémie de la presse à injecter arrive dans le fourreau qui est chauffé à température adéquate puis elle est convoyée par une vis sans fin jusqu'à la buse d'injection reliée au moule ayant le forme désirée. Une fois la matière dosée (volume lié à celui de la pièce à injecter), la vis s'arrête de tourner et le remplissage du moule est réalisé sous pression (la vis joue le rôle de piston). Le mélange est ensuite compacté dans l'empreinte durant le maintien en pression. La pièce est ensuite éjectée lorsque le mélange est suffisamment refroidi (rigidité suffisante). Les principaux paramètres qui gouvernent cette étape sont : la température des matières premières, la température du moule, la pression d'injection et la vitesse d'injection.

La troisième étape 3, correspond à l'opération de déliantage. Le déliantage est une opération clef du procédé qui consiste à supprimer les matières organiques de la matrice chargée, une fois la pièce injectée. La qualité de cette opération est fondamentale pour ne pas provoquer de dégâts physiques (fissurations) ou chimiques (carburation) à la pièce. Une part très importante des défauts qui apparaissent après frittage est générée par un déliantage inadéquat.

La quatrième étape 4, correspond à l'opération de frittage. Une fois, l'étape de déliantage terminée, la pièce doit être consolidée par une étape de frittage. Le frittage est un procédé thermique qui permet, en chauffant des poudres compactées, généralement en dessous de leur point de fusion, de leur donner une cohésion après refroidissement et d'obtenir la microstructure désirée du matériau final. Le principe du frittage est basé sur la diffusion atomique : des particules en contact se soudent par des phénomènes de transport atomique par diffusion si elles sont soumises à des températures supérieures à la moitié de leur température absolue de fusion de manière à obtenir un objet fini O_{F}.

### Exemples de compositions chargées utilisées dans la présente invention :

Afin de démontrer la possibilité de mettre en oeuvre d'une façon satisfaisante au sens de la problématique précitée les compositions de la présente invention, plusieurs compositions chargées comprenant un plastifiant, un liant et un dispersant tels que décrites dans la présente invention avec une poudre d'actinides réputée cohésive, ont été réalisées et ce avec des poudres d'oxydes d'uranium industrielles.

L'une des principales difficultés induites par l'emploi de poudres d'actinides dans le procédé MPI étant liée au caractère cohésif de ce type de poudre, l'exemple de poudre utilisée pour l'illustration de la présente invention est représentatif de cette caractéristique. Pour ce faire, il a été employé de la poudre d'oxyde d'uranium, dont les cristallites (objets élémentaires constitutifs de la poudre) sont regroupés en agrégats qui eux-mêmes sont amassés en agglomérats.

Les principales caractéristiques de la poudre utilisée majoritairement pour l'illustration de la présente invention sont données ci-après :
- un diamètre d'agglomérat formé : D_{agglomérat} compris entre 10 et 200 µm ;
- un diamètre d'agrégat formé : D_{agrégat} égal à 1 µm ;
- un diamètre des cristallites formées : D_{cristallites} égal à 0,3 µm ;
- une surface spécifique : Ssa = 2 m²/g.

La figure 2 illustre l'allure de la pression d'écoulement en fonction du taux de cisaillement (unité : s⁻¹) pour un cas type de mauvaise formulation ou condition de malaxage, pouvant typiquement être obtenue à partir d'une matrice organique comprenant un polymère standard. La pression subit de fortes instabilités pour des vitesses de cisaillement de l'ordre de 2000 s⁻¹.

Différentes compositions composites chargées selon l'invention regroupées dans le Tableau 1, ci-dessous ont été étudiées :

**Tableau 1**

| Formulation | Constituants | Pourcentages (hors base poudre) | Taux de charge volumique de la poudre |
|---|---|---|---|
| Fd | Polystyrène/Paraffine/AS | 40/55/5 | 50% |
| Fe | PEBD/PS/Paraffine/AS | 31,6/20/43,4/5 | 50% |
| Ff | PEBD/Paraffine/PMMA/AS | 31,6/43,4/20/5 | 50% |

| | | | |
|---|---|---|---|
| avec PEBD : du polyéthylène basse densité et AS de l'acide stéarique | | | |

Le Tableau 2, ci-dessous donne des exemples de conditions opératoires dans lesquelles les compositions de la présente invention ont été réalisées.

**Tableau 2**

| Etape du procédé | Conditions opératoires |
|---|---|
| Malaxage (réalisé dans un malaxeur à pales) | T°= 175 °C |
| | Temps = 60 minutes |
| | Vitesse de rotation des pales = 30 tours/min |
| Mise en forme par injection | Pression d'injection : 1500 bars |
| | Pression de maintien : 1200 bars |
| | Température : 225 °C |
| | Temps de refroidissement : 30s |
| | Force de fermeture du moule : 80 kN |
| | Vitesse d'injection : 20cm³/s |
| Déliantage (thermique) | Cycle thermique : différentes montées en températures s'échelonnant de la température ambiante à 570°C avec différents paliers, sous atmosphère Ar/H₂ 5% |
| Frittage | Cycle thermique : montée en température à 300°C/h, puis palier 4 heures à 1700°C et rampe de descente en température à 600°C/h |

La présente description fournit ci-après les éléments permettant d'illustrer l'atteinte des multiples critères d'acceptabilité des compositions chargées décrites notamment dans la problématique de la présente invention.

### Injectabilité et taux de charge dans des compositions chargées selon l'invention :

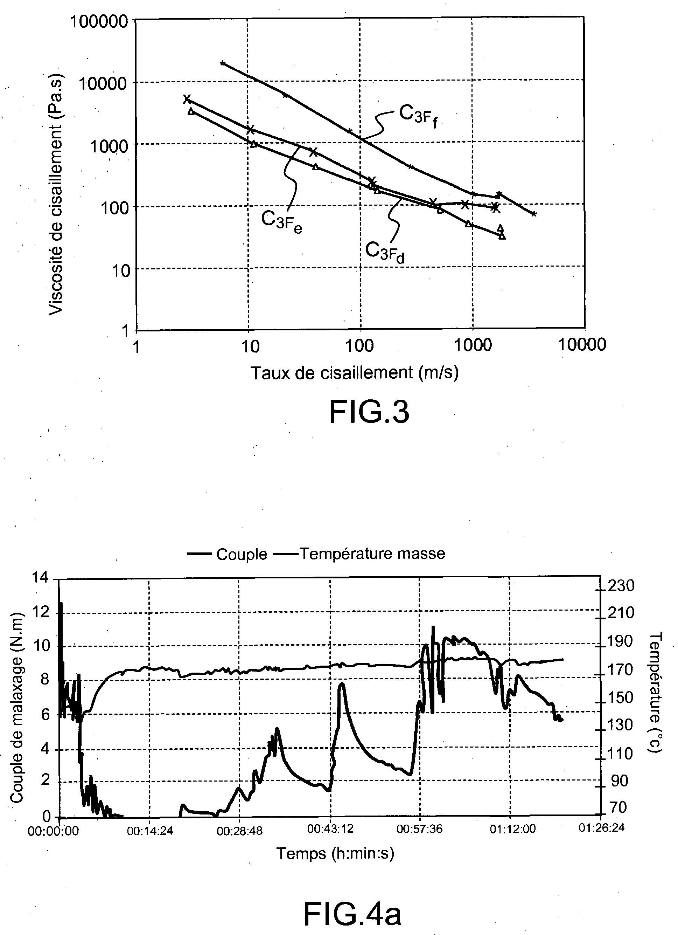

La figure 3 donne une illustration de l'injectabilité des compositions Fd, Fe et Ff précitées et est représentative de la viscosité de cisaillement en fonction du taux de cisaillement (unité : s⁻¹) à 220°C, et ce avec une température de malaxage de 175°C et un taux de charge de 50% volume. Les courbes C_{3Fd}, C_{3Fe} et C_{3Ff} étant respectivement relatives aux compositions Fd, Fe et Ff.

Au vu des valeurs de la viscosité de cisaillement de ces formulations, il est possible d'indiquer que ces compositions chargées sont bien acceptables vis-à-vis du critère rhéologique malgré un taux de charge relativement important, car se situant entre 50 et 10000 Pa.s.

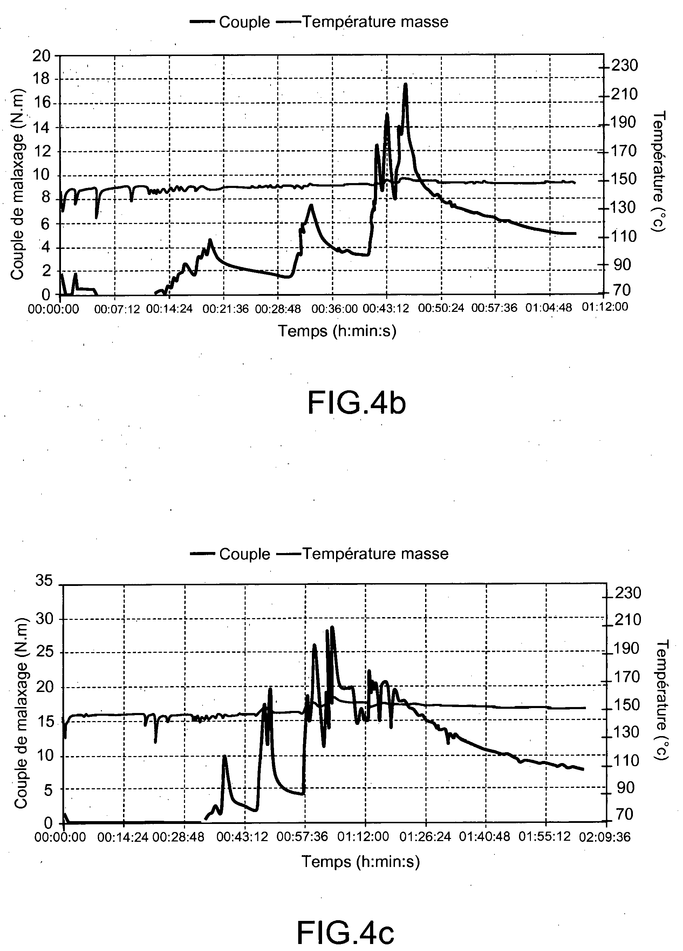

Les figures 4a, 4b, 4c illustrent l'évolution des couples de malaxages en fonction du temps pour les compositions Fd, Fe et Ff, (sur ces figures, l'ordonnée à droite correspond à la température de malaxage).

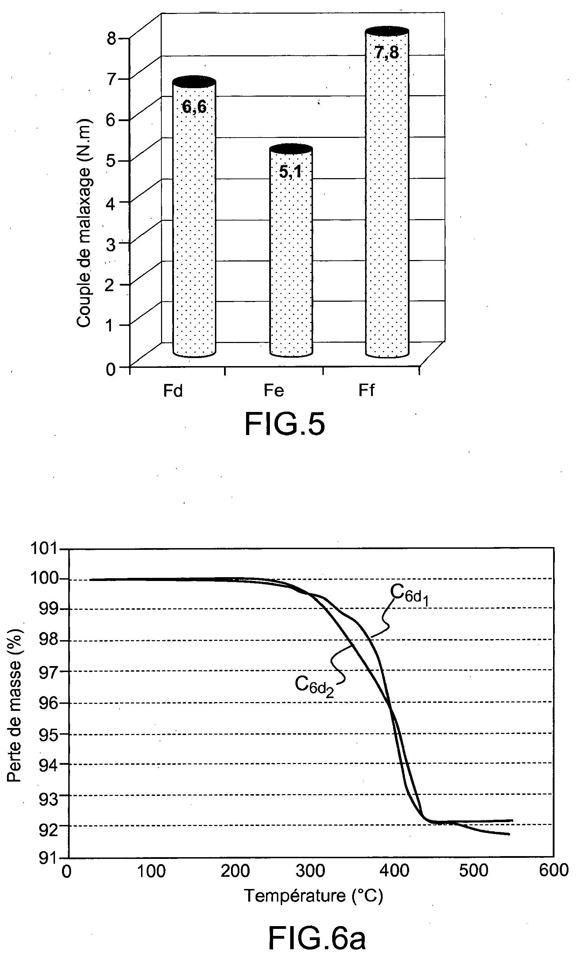

La figure 5 illustre les valeurs de couple de malaxage pour les formulations Fd, Fe et Ff pour un taux d'incorporation de poudre d'UO₂ de 50% volumique, une température de T_{malaxage} = 145°C pour les compositions chargées Fe et Ff et une température T_{malaxage} = 175°C pour la composition chargée Fd.

### Stabilité des propriétés des compositions chargées selon l'invention :

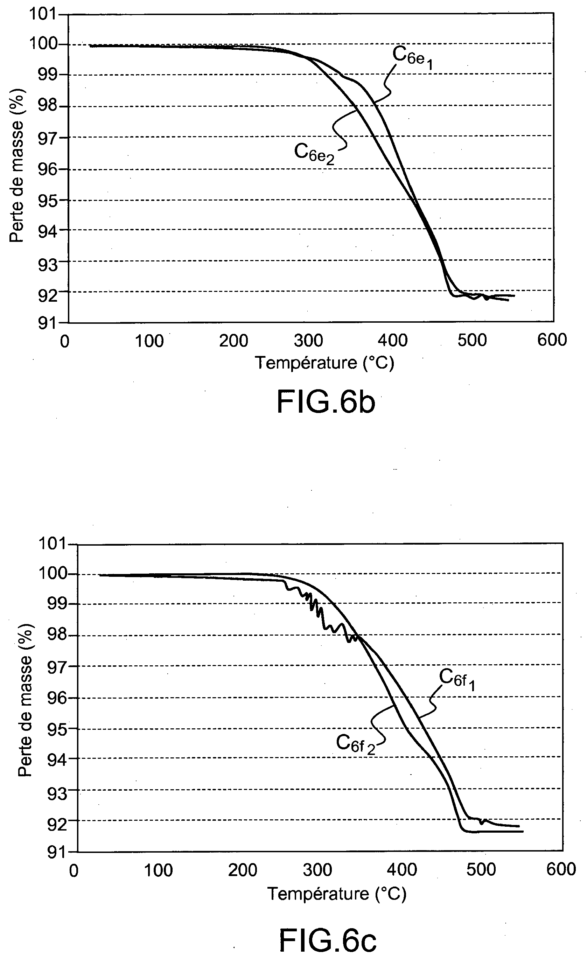

Les trois compositions chargées précédentes ont par ailleurs été évaluées lors d'une opération de déliantage et ces résultats ont été comparés à des résultats théoriques. Les figures 6a, 6b et 6c sont respectivement relatives aux compositions chargées Fd, Fe et Ff et illustrent la quasi absence d'interaction des constituants organiques de la matrice dont le comportement global au déliantage peut être assimilé à une combinaison linéaire des comportements individuels de ces derniers. Plus précisément les courbes C_{6d1}, C₆ₑ₁ et C_{6f1} sont relatives aux courbes théoriques, les courbes C_{6d2}, C₆ₑ₂ et C_{sf2} étant relatives aux courbes expérimentales.

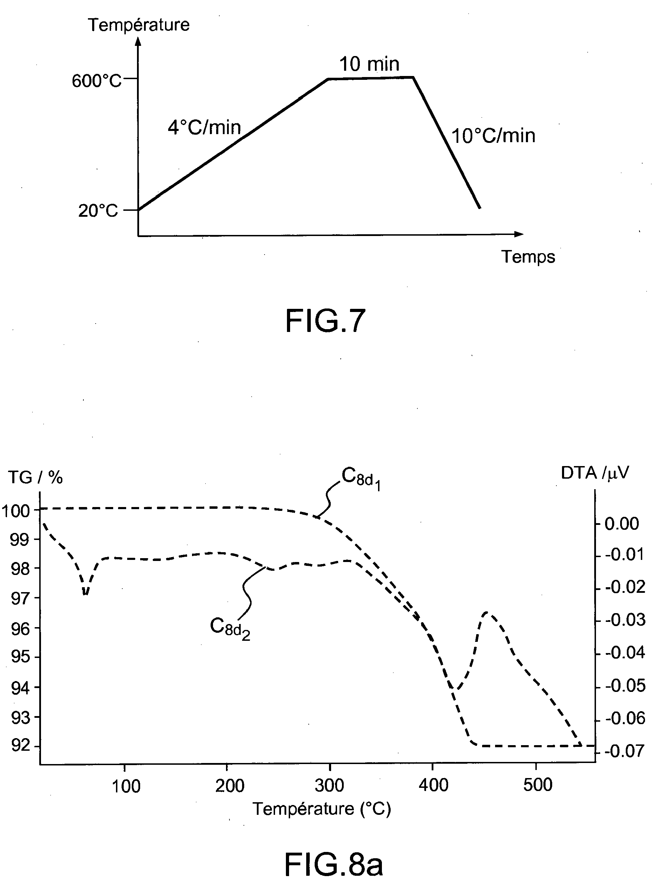

Un exemple de cycle thermique pouvant être utilisé sous atmosphère d'argon et d'hydrogène dans le processus de déliantage est illustré en figure 7, est appliqué aux trois compositions chargées : Fd, Fe et Ff, ce cycle thermique court a été mis en oeuvre pour permettre des évaluations rapides des compositions obtenues. De manière générale, il sera préféré des cycles longs de déliantage (typiquement quelques heures) lors de traitement industriels de fabrication de poudres mises en forme pour permettre de conserver l'intégrité de la pièce.

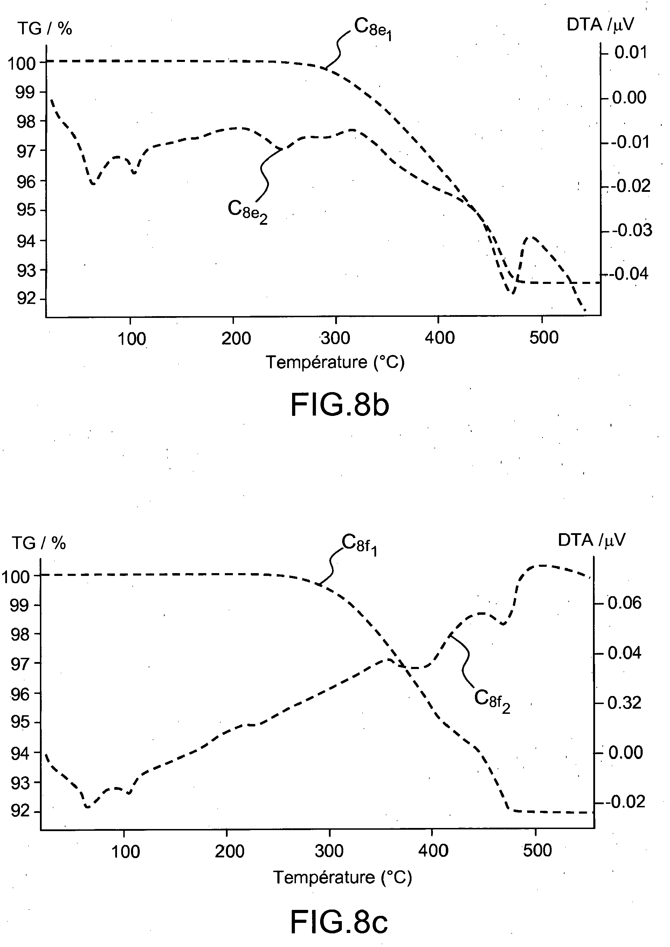

Les figures 8a, 8b et 8c illustrent les opérations de déliantage quant au comportement thermique des compositions chargées Fd, Fe et Ff. Plus précisément les courbes C_{8d1}, C₈ₑ₁ et C_{8f1} sont relatives à des résultats de mesure ATG et les courbes C_{8d2}, C₈ₑ₂ et C_{8f2} sont relatives à des résultats de mesure ATD. Il s'agit de mesures d'analyse Thermo-Gravimétrique (ATG) et d'analyse Thermique Différentielle (ATD).

L'analyse thermique différentielle (ATD) est une méthode utilisée pour déterminer les températures correspondant à des modifications du matériau en fonction du traitement thermique. Elle consiste à mesurer la différence de température entre un échantillon (Te) et une référence (Tr) (matériau inerte thermiquement) en fonction du temps ou de la température, lorsqu'ils sont soumis à une variation programmée de température, sous atmosphère contrôlée.

D'une manière générale, les transitions de phase et l'évaporation de solvants se traduisent par des pics endothermiques. Par contre, la cristallisation, l'oxydation et certaines réactions de décomposition se caractérisent par des pics exothermiques. L'ATD est généralement associée à une analyse thermogravimétrique (ATG) qui permet de mesurer la variation d'une masse d'un échantillon en fonction de la température de traitement thermique. Cette variation de masse peut être une perte de masse telle que l'émission de vapeurs ou un gain de masse lors de la fixation d'un gaz par exemple. Les courbes de ces figures ne montrent pas de pics d'exothermicité ni d'événement notable autre que des phénomènes de fusion et de dégradation/volatilisation des constituants du feedstock ce qui confirme la stabilité de ces formulations.

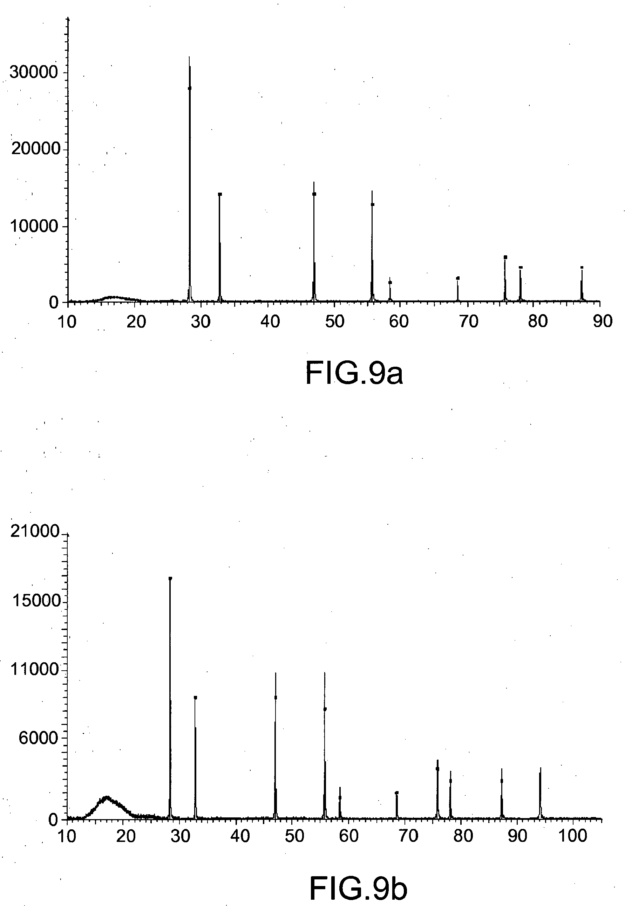

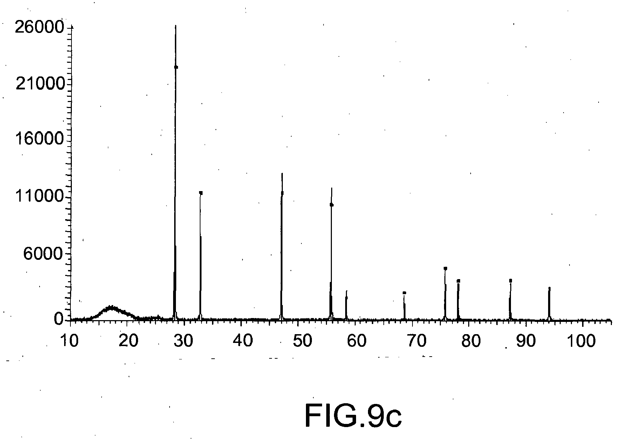

Ces mesures sont renforcées dans leur conclusion par les mesures DRX qui ont été faites en fin de procédé de mise en oeuvre des poudres et donc après l'opération de frittage. Les figures 9a, 9b et 9c illustrent à cet effet, les spectres DRX des compositions chargées Fd, Fe et Ff et ne permettent pas de mettre en évidence une modification de la phase UO₂ du combustible ce qui va dans le sens d'une non interaction significative de la poudre d'actinide avec les polymères de mise en forme ce qui est visé avec les présentes compositions chargées Fd, Fe et Ff.

### Aptitude au déliantage des compositions chargées selon l'invention :

Pour ce qui concerne le critère de l'aptitude au déliantage, il est nécessaire que l'opération de déliantage puisse s'opérer tout en conservant l'intégrité de la pièce une fois les polymères de mise en forme déliantés et sans proportion trop importante de résidus carbonés qui ne serait pas éliminable lors du frittage et qui pourrait par ailleurs modifier la microstructure du matériau d'actinide fritté.

Pour démontrer l'acceptabilité des exemples de compositions chargées Fd, Fe et Ff vis-à-vis de ce critère, le Tableau 4 ci-dessous donne les pourcentages de résidus carbonés des pièces finales à l'issue de l'opération de frittage.

**Tableau 4**

| Formulation | Taux de carbone résiduel après frittage |
|---|---|
| Fd | 0,0113%wt |
| Fe | 0,0112%wt |
| Ff | 0,0129%wt |

## Revendications

1. Composition chargée en poudre d'actinide comprenant une matrice organique et une poudre d'actinide ou un mélange de poudres d'actinides **caractérisée en ce qu'**elle comprend au moins :
- un plastifiant comportant un alcane dont la plus longue chaîne radicalaire comporte au moins quelques dizaines d'atomes de carbone et de teneur volumique comprise entre 20 et 70% du volume total des composés organiques seuls ;
- un liant comprenant au moins un polymère aromatique et/ou du polyméthacrylate de méthyle, capable de limiter les effets de radiolyse et de teneur volumique comprise entre 20 et 50 % du volume total des composés organiques seuls;
- un dispersant comprenant un acide carboxylique ou ses sels dont la teneur volumique est inférieure à 10% du volume total des composés organiques seuls ;
- ladite poudre d'actinide ou ledit mélange de poudre d'actinides
- représentant entre 40% et 65% du volume de la matrice chargée.

2. Composition chargée en poudre d'actinide selon la revendication 1, **caractérisée en ce que** le liant comprend du polystyrène.

3. Composition chargée en poudre d'actinide selon la revendication 1, **caractérisée en ce que** le liant comprend du polystyrène et un poly-oléfinique.

4. Composition chargée en poudre d'actinide selon la revendication 1, **caractérisée en ce que** le liant comprend du polyméthacrylate de méthyle et un poly-oléfinique pouvant être du polyéthylène.

5. Composition chargée en poudre d'actinide selon l'une des revendications 1 à 4, **caractérisée en ce que** le plastifiant comprend de la paraffine.

6. Composition chargée en poudre d'actinide selon l'une des revendications 1 à 4, **caractérisée en ce que** le plastifiant comprend du polypropylène.

7. Composition chargée en poudre d'actinide selon l'une des revendications 1 à 6, **caractérisée en ce que** la surface spécifique des grains de ladite poudre d'actinides est comprise entre environ 1 m²/g et 15 m²/g.

8. Composition chargée en poudre d'actinide selon l'une des revendications 1 à 7, **caractérisée en ce que** la densité tassée de ladite poudre d'actinides est comprise entre environ 10 à 70% de la densité théorique du/des composé(s) de la poudre/des poudres.

9. Composition chargée en poudre d'actinide selon l'une des revendications 1 à 8, **caractérisée en ce que** la densité théorique des matériaux constitutifs de la poudre est comprise entre 2 à 20.

10. Composition chargée en poudre d'actinide selon la revendication 9, **caractérisée en ce que** la densité théorique des matériaux constitutifs de la poudre est comprise entre 7 à 19.

11. Composition chargée en poudre d'actinide selon l'une des revendications 1 à 10, **caractérisée en ce que** le polymère poly-oléfinique possède une masse molaire moyenne d'au moins 10 000 g/mol.

12. Composition chargée en poudre d'actinide selon l'une des revendications 1 à 11, **caractérisée en ce que** l'acide carboxylique ou ses sels présentent une masse molaire au moins égale à 100 g/mol.

13. Composition chargée en poudre d'actinide selon l'une des revendications 1 à 11, **caractérisée en ce que** la proportion massique dudit acide carboxylique ou de son/ses sels par rapport à la masse de poudres d'actinides est comprise entre environ 0,01 et 1% massique.

## Patentansprüche

1. Mit Actinoidpulver beladene Zusammensetzung, umfassend eine organische Matrix und ein Actinoidpulver oder ein Gemisch von Pulvern von Actinoiden, **dadurch gekennzeichnet, dass** sie zumindest umfasst:
- ein Weichmachungsmittel, umfassend ein Alkan, dessen längste radikalische Kette zumindest einige zehn Kohlenstoffatome umfasst, und mit einem Volumengehalt zwischen 20 und 70% des Gesamtvolumens nur der organischen Verbindungen;
- ein zumindest ein aromatisches Polymer und/oder Polymethylmethacrylat umfassendes Bindemittel, in der Lage, die Radiolysewirkungen zu begrenzen, und mit einem Volumengehalt zwischen 20 und 50% des Gesamtvolumens nur der organischen Verbindungen;
- ein eine Carbonsäure oder deren Salze umfassendes Dispergiermittel, dessen Volumengehalt unter 10% des Gesamtvolumens nur der organischen Verbindungen liegt;
- wobei das Actinoidpulver oder das Gemisch von Pulver von Actinoiden zwischen 40% und 65% des Volumens der beladenen Matrix darstellt.

2. Mit Actinoidpulver beladene Zusammensetzung nach Anspruch 1, **dadurch gekennzeichnet, dass** das Bindemittel Polystyrol umfasst.

3. Mit Actinoidpulver beladene Zusammensetzung nach Anspruch 1, **dadurch gekennzeichnet, dass** das Bindemittel Polystyrol und ein Polyolefin umfasst.

4. Mit Actinoidpulver beladene Zusammensetzung nach Anspruch 1, **dadurch gekennzeichnet, dass** das Bindemittel Polymethylmethacrylat und ein Polyolefin umfasst, das Polyethylen sein kann.

5. Mit Actinoidpulver beladene Zusammensetzung nach einem der Ansprüche 1 bis 4, **dadurch gekennzeichnet, dass** das Weichmachungsmittel Paraffin umfasst.

6. Mit Actinoidpulver beladene Zusammensetzung nach einem der Ansprüche 1 bis 4, **dadurch gekennzeichnet, dass** das Weichmachungsmittel Polypropylen umfasst.

7. Mit Actinoidpulver beladene Zusammensetzung nach einem der Ansprüche 1 bis 6, **dadurch gekennzeichnet, dass** die spezifische Oberfläche der Körner des Pulvers von Actinoiden zwischen etwa 1 m²/g und 15 m²/g liegt.

8. Mit Actinoidpulver beladene Zusammensetzung nach einem der Ansprüche 1 bis 7, **dadurch gekennzeichnet, dass** die Stampfdichte des Pulvers von Actinoiden zwischen etwa 10 bis 70% der theoretischen Dichte der Verbindung/-en des Pulvers/der Pulver liegt.

9. Mit Actinoidpulver beladene Zusammensetzung nach einem der Ansprüche 1 bis 8, **dadurch gekennzeichnet, dass** die theoretische Dichte der das Pulver bildenden Materialien zwischen 2 bis 20 liegt.

10. Mit Actinoidpulver beladene Zusammensetzung nach Anspruch 9, **dadurch gekennzeichnet, dass** die theoretische Dichte der das Pulver bildenden Materialien zwischen 7 bis 19 liegt.

11. Mit Actinoidpulver beladene Zusammensetzung nach einem der Ansprüche 1 bis 10, **dadurch gekennzeichnet, dass** das polyolefinische Polymer eine mittlere molare Masse von zumindest 10000 g/mol besitzt.

12. Mit Actinoidpulver beladene Zusammensetzung nach einem der Ansprüche 1 bis 11, **dadurch gekennzeichnet, dass** die Carbonsäure oder ihre Salze eine molare Masse zumindest gleich 100 g/mol aufweisen.

13. Mit Actinoidpulver beladene Zusammensetzung nach einem der Ansprüche 1 bis 11, **dadurch gekennzeichnet, dass** der Massenanteil der Carbonsäure oder ihres Salzes/ihrer Salze bezogen auf die Masse von Pulvern von Actinoiden zwischen etwa 0,01 und 1 Massen-% liegt.

## Claims

1. A composition filled with actinide powder comprising an organic matrix and an actinide powder or a mixture of actinide powders, **characterised in that** it comprises at least:
- one plasticiser comprising an alkane, the longest radical chain of which comprises at least several tens of carbon atoms, and having volume content between 20% and 70% of the total volume of the organic compounds alone;
- a binder comprising at least one aromatic polymer and/or polymethyl methacrylate capable of limiting the radiolysis effects and having volume content between 20% and 50% of the total volume of the organic compounds alone;
- a disperser comprising a carboxylic acid or salts thereof, the volume content of which is less than 10% of the total volume of the organic compounds alone;
- said actinide powder or said mixture of actinide powders representing between 40% and 65% of the volume of the filled matrix.

2. The composition filled with actinide powder according to claim 1, **characterised in that** said binder comprises polystyrene.

3. The composition filled with actinide powder according to claim 1, **characterised in that** said binder comprises polystyrene and a polyolefin.

4. The composition filled with actinide powder according to claim 1, **characterised in that** said binder comprises polymethyl methacrylate and a polyolefin that can be polyethylene.

5. The composition filled with actinide powder according to any one of claims 1 to 4, **characterised in that** said plasticiser comprises paraffin.

6. The composition filled with actinide powder according to any one of claims 1 to 4, **characterised in that** said plasticiser comprises polypropylene.

7. The composition filled with actinide powder according to any one of claims 1 to 6, **characterised in that** the specific surface area of the grains of said powder of actinides is between approximately 1 m²/g and 15 m²/g.

8. The composition filled with actinide powder according to any one of claims 1 to 7, **characterised in that** the tapped density of said powder of actinides is between approximately 10% and 70% of the theoretical density of the compound(s) of the powder(s).

9. The composition filled with actinide powder according to any one of claims 1 to 8, **characterised in that** the theoretical density of the constituent materials of the powder is between 2 and 20.

10. The composition filled with actinide powder according to claim 9, **characterised in that** the theoretical density of the constituent materials of the powder is between 7 and 19.

11. The composition filled with actinide powder according to any one of claims 1 to 10, **characterised in that** the polyolefin polymer has a mean molar mass of at least 10,000 g/mol.

12. The composition filled with actinide powder according to any one of claims 1 to 11, **characterised in that** the carboxylic acid or salts thereof have a molar mass that is at least equal to 100 g/mol.

13. The composition filled with actinide powder according to any one of claims 1 to 11, **characterised in that** the mass proportion of said carboxylic acid or salts thereof relative to the mass of actinide powders is between approximately 0.01% and 1% by mass.
